(19) Europäisches Patentamt
European Patent Office
Office européen des brevets

(11) **EP 3 176 487 B1**

(12) **EUROPÄISCHE PATENTSCHRIFT**

(45) Veröffentlichungstag und Bekanntmachung des Hinweises auf die Patenterteilung:
**07.07.2021 Patentblatt 2021/27**

(51) Int Cl.:
***F16L 58/10*** *(2006.01)*

(21) Anmeldenummer: **16196698.1**

(22) Anmeldetag: **07.12.2012**

(54) **VERFAHREN ZUR BESCHICHTUNG VON ROHREN**

METHOD FOR COATING TUBES

PROCÉDÉ DE REVÊTEMENT DE TUBES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.02.2012 EP 12153964**

(43) Veröffentlichungstag der Anmeldung:
**07.06.2017 Patentblatt 2017/23**

(62) Dokumentnummer(n) der früheren Anmeldung(en) nach Art. 76 EPÜ:
**12798290.8 / 2 766 653**

(73) Patentinhaber: **MV Pipe Technologies GmbH 19322 Wittenberge (DE)**

(72) Erfinder:
• **Rönpagel, Andreas 23840 Bad Oldesloe (DE)**
• **Steinhoff, Michael 58313 Herdecke (DE)**

(74) Vertreter: **Eisenführ Speiser Patentanwälte Rechtsanwälte PartGmbB Postfach 10 60 78 28060 Bremen (DE)**

(56) Entgegenhaltungen:
**US-A1- 2011 003 161    US-A1- 2011 224 347**

• **Anonymous: "Autophoretic Aquence Industrial Coating Plating Steel Surface Protection Zinc Alternative", , 1. Januar 2007 (2007-01-01), XP055367883, Gefunden im Internet: URL:http://www.icscoating.com/Autophoretic .h tml [gefunden am 2017-04-26]**
• **Henkel: "Aquence 930 Coating", , 1. Januar 2010 (2010-01-01), XP055367890, Gefunden im Internet: URL:http://www.henkel-adhesives.com/com/co ntent_data/349689_228941_LT5866_Aquence93 0 _BONDERITE_MPP930.pdf [gefunden am 2017-04-26]**

**Beschreibung**

Die vorliegende Erfindung bezieht sich auf die Verwendung einer Epoxid/Acryl-basierten Beschichtungsflüssigkeit welche FeF3-Eisenfluorid und Lackpartikel in wässriger Dispersion enthält, zur Beschichtung eines Rohres (1) gemäß Anspruch 1.

Die Erfinder sahen sich anfangs der speziellen Aufgabe einer monetären Verbesserung in der Auslegung und im Betrieb von Brandschutzanlagen, genauer von Sprinkleranlagen ausgesetzt. Verallgemeinert stellte sich die Aufgabe derart dar, dass auf dem Markt keinerlei Rohrmaterial insbesondere aus Flussstahl und zur Verwendung als Durchleitungsmittel für Feuerlöschmedien zur Verfügung stand, das auch nach längerer Zeit der Benutzung frei von Korrosionen war und deshalb nicht zum Gegenstand von Gewährleistungsansprüchen werden konnte.

Nach intensiven Überlegungen und Versuchen konnten die Erfinder schließlich ein Verfahren finden, mit dessen Hilfe Rohre hergestellt werden können, die den zugrundeliegenden Anforderungen vollends genügen. Das erfindungsgemäße Verfahren ist in seiner allgemeinsten Form derart zu beschreiben, dass ein Verfahren zur Beschichtung eines Rohres (1) in seinem Inneren beansprucht wird, wobei das in seinem Inneren zu beschichtende Rohr (1)

- eine Außenseite (a) und eine Innenseite (b),

- ein erstes äußere Ende ($e_1$) an dem ersten Ende des Rohres (1) und ein zweites äußere Ende ($e_2$) an dem zweiten Ende des Rohres (1),

- eine Länge (L),

- einen ersten Innendurchmesser ($D_1$) an dem ersten äußeren Ende ($e_1$) des Rohres (1) und einen zweiten Innendurchmesser ($D_2$) an dem zweiten äußeren Ende ($e_2$) des Rohres (1),

- eine Mittelachse (M)
  wobei das erfindungsgemäße Verfahren dadurch gekennzeichnet ist, dass das Verfahren mindestens die folgenden Verfahrensschritte aufweist:

  (i.) Bereitstellen eines Tauchbeckens (2), das

  - bis zu einer Füllhöhe (h) befüllt mit einer Beschichtungsflüssigkeit (3),

  - geeignet zur Aufnahme von dem zu beschichtenden Rohr (1) über seine volle Länge (L),

  (ii.) erstes Eintauchen des zu beschichtenden Rohres (1) in die Beschichtungsflüssigkeit (3),
  (iii.) erste Herausnahme des zu beschichtenden Rohres (1) aus der Beschichtungsflüssigkeit (3) unter Gewährleistung eines Winkels ($\alpha$) zwischen der Mittelachse (M) und der Oberfläche der Beschichtungsflüssigkeit (3) mit $1° < (\alpha) < 30°$,
  (iv.) zweites Eintauchen des zu beschichtenden Rohres (1) in die Beschichtungsflüssigkeit (3),
  (v.) zweite Herausnahme des zu beschichtenden Rohres (1) aus der Beschichtungsflüssigkeit (3) unter Gewährleistung eines Winkels ($\beta$) zwischen der Mittelachse (M) und der Oberfläche der Beschichtungsflüssigkeit (3) mit $-30° < (\beta) < -1°$,
  (vi.) Gewährleistung einer Füllhöhe (h) der Beschichtungsflüssigkeit (3) im Tauchbecken (2) mit $(h) > (L) \cdot \sin(\alpha)$ und $(h) > (L) \cdot \sin(\beta)$.

Aus wirtschaftlichen Gründen gilt es als bevorzugt, wenn gleichzeitig eine Vielzahl an Rohren (1) die Verfahrensschritte (ii.) bis (vi.) vollziehen, dass bedeutet, wenn nicht nur ein einzelnes Rohr (1) sondern gleichzeitig eine Vielzahl an Rohren (1) die beiden Tauchgänge in die Beschichtungsflüssigkeit (3) vollziehen, wobei die Füllhöhe (h) der Beschichtungsflüssigkeit (3) im Tauchbecken (2) derart gewählt wird, dass am untersten Punkt der Rohre (1) während der Tauchgänge alle Rohre (1) in Gänze in der Beschichtungsflüssigkeit (3) eingetaucht sind.

In einer bevorzugten Ausführung des hier vorgeschlagenen Verfahrens werden die vier Verfahrensschritte (ii.) des ersten Eintauchens, (iii.) der ersten Herausnahme, (iv.) des zweiten Eintauchens und (v.) der zweiten Herausnahme wiederholt mit einer Wiederholungszahl zwischen 1 und 7, ganz besonders bevorzugt mit einer Wiederholungszahl zwischen 1 und 3. Im besonders bevorzugten Fall bedeutet das, dass die Rohre (1) bis zu dreimal hintereinander die vier Verfahrensschritte (ii.) des ersten Eintauchens, (iii.) der ersten Herausnahme, (iv.) des zweiten Eintauchens und (v.) der zweiten Herausnahme vollziehen.

In einer weiteren bevorzugten Ausführung des hier vorgeschlagenen Verfahrens liegt der Winkel ($\alpha$) innerhalb

des Intervalls von 1,8° und 5,5° und noch weiter eingeschränkt innerhalb des Intervalls von 1,8° und 3,5°. Gleichzeitig gilt es als bevorzugt, wenn der Winkel ($\beta$) innerhalb des Intervalls von -1,8° und -5,5° liegt, noch weiter eingeschränkt innerhalb des Intervalls von 1,8° und 3,5°. Ganz besonders bevorzugt sind die Winkel ($\alpha$) und ($\beta$) innerhalb der vier Verfahrensschritte (ii.) des ersten Eintauchens, (iii.) der ersten Herausnahme, (iv.) des zweiten Eintauchens und (v.) der zweiten Herausnahme identisch.

Im Sinne der vorliegenden Erfindung ist die Beschichtungsflüssigkeit (3) als wässerige Dispersion ausgebildet. Die Erfinder erkannten diesbezüglich, dass während des Beschichtungsvorgangs die Diffusion der für die Beschichtung vorgesehenen Partikel als zumindest ein fester Bestandteil der Dispersion zeitlich sehr langsam in Richtung der zu beschichtenden Rohrinnenwand abläuft. Die Erfinder erkannten weiterhin, dass zur Gewährleistung einer ausreichenden Beschichtungsdicke in einem bevorzugten Bereich von 15 bis 28 $\mu$m, ganz besonders bevorzugt in einem Bereich von 21 bis 27 $\mu$m, eine bevorzugt turbulente Beströmung der inneren Rohrwandungen (b) mit der Beschichtungsflüssigkeit (3) zu erzeugen ist. Dabei hat die bevorzugt turbulente Strömung die Aufgabe zu erfüllen, möglichst kontinuierlich und ständig Beschichtungspartikel in Kontakt mit den inneren Wandungen (b) der zu beschichtenden Rohre (1) zu bringen. Zu diesem Zweck muss also nicht nur eine bevorzugt turbulente Strömung, sondern auch genügend an der zu beschichtenden Rohrinnenwand vorbeizuführende Beschichtungsflüssigkeit (3) gewährleistet sein. Die ausreichende Menge an Beschichtungsflüssigkeit (3) wird gewährleistet

☐ zum ersten durch die Füllhöhe (h) der Beschichtungsflüssigkeit (3) im Tauchbecken (2) gemäß erfindungsgemäßem Verfahrensschritt (vi.) und

☐ zum zweiten durch die beiden Tauchgänge gemäß der erfindungsgemäßen Verfahrensschritte (ii.) bis (v.), bei der jeweils einmal zum einen das erste äußere Ende (e₁) an dem ersten Ende des Rohres (1) und zum anderen das zweite äußere Ende (e₂) an dem

zweiten Ende des Rohres (1) an tieferer Position während der beiden Tauchvorgänge gemäß der erfindungsgemäßen Verfahrensschritte (ii.) bis (v.) sind und so durch das mit Beschichtungsflüssigkeit (3) gefüllte Rohr (1) gewährleistet ist, dass eine große Menge an Beschichtungsflüssigkeit (3) an den tieferen Rohrbereichen vorbeigeführt werden kann.

Nach intensiven, der Erfindung zugrundeliegenden Arbeiten erkannten die Erfinder schließlich, dass für den Winkel ($\alpha$) ein Intervall von 1° bis 30° und für den Winkel ($\beta$) ein Intervall von -1 ° bis -30° erfindungswesentlich ist. Die Bedeutung dieses Merkmals ist, dass das zu beschichtende Rohr (1) um den Winkel ($\alpha$) mit 1 ° < ($\alpha$) < 30° [bzw. um den Winkel ($\beta$) mit -30° < ($\beta$) < -1°] gegenüber der Waagerechten, welche parallel verläuft zur Oberfläche der Beschichtungsflüssigkeit (3), verschwenkt ist. Unterhalb von 1° bzw. oberhalb von -1 ° besteht zum einen die Gefahr eines Aufschwimmens der Rohre (1) beim Eintauchen in die Beschichtungsflüssigkeit (3) und zum anderen bildet sich keine ausreichende insbesondere turbulente Strömung weder während des Eintauchens der Rohre (1) in die Beschichtungsflüssigkeit (3) noch während der Herausnahme der Rohre (1) aus der Beschichtungsflüssigkeit (3) aus, womit durch die Beströmung kein ausreichender Austausch an Beschichtungsflüssigkeit (3) im direkten Kontakt mit der Innenwandung (b) der Rohre (1) möglich ist. Dieses führt zu einer uneinheitlichen und insbesondere zu geringen Beschichtung mit Fehlstellen. Oberhalb von 30° bzw. unterhalb von -30° sind die Zeiten, in denen - während des Eintauchens der Rohre (1) in die Beschichtungsflüssigkeit (3) bzw. während der Herausnahme der Rohre (1) aus der Beschichtungsflüssigkeit (3) - die Beschichtungsflüssigkeit (3) in Kontakt mit den Innenwandungen (b) der Rohre (1) kommt zu kurz, um eine ausreichende und ausreichend dicke Beschichtung der Rohrinnenwände zu gewährleisten. Bei den bevorzugten Winkelintervallen konnten die Beschichtungsdicken und -qualitäten nochmals signifikant verbessert werden.

Grundsätzlich sind viele verschiedene Beschichtungen in Anwendung des diesseits vorgeschlagenen Verfahrens denkbar wie beispielsweise anodisches und auch kathodisches Tauchlackieren sowie Parkerisieren. Nach vielen intensiven Überlegungen und mit diesen Überlegungen verbundenen Versuchen stellt es eine ganz besonders bevorzugte Ausführung der diesseitigen Erfindung dar, wenn innerhalb des hier vorgeschlagen Verfahrens in all seinen verschiedenen Ausführungsformen die Beschichtungsflüssigkeit (3) eine Epoxyd/Acryl-basierte Aquence™-Beschichtungsmasse ist, wobei insbesondere das Aquence™-Verfahren der 900-Serie und genauso möglicher Folgeserien mit gleichartiger Technologie als ganz besonders bevorzugt gilt.

Das von der Firma Henkel in Düsseldorf, Deutschland, entwickelte Aquence-Verfahren ist in der Lage, eine Beschichtung auf chemischer Basis hier an der Innenwandung (b) von Rohren (1) auszubilden, bei der in grundsätzlicher Art und Weise und mit Blick auf die diesseits vorgestellte Erfindung in Form einer Dispersion zugeführtes $FeF_3$-Eisenflorid für eine Freisetzung von $Fe^{2+}$-Ionen an der innenseitigen Oberfläche der Metallrohre (1) sorgt, welche sich mit ebenso in Form der obigen Dispersion zugeführten Lackpartikeln verbinden und sich sodann wieder an die innenseitige Oberfläche der Metallrohre (1) anlagern. Im Laufe eines ausreichend lang bemessenen Anlagerungsprozesses über den Zyklus von mindestens zwei Tauchgängen gemäß der vier Verfahrensschritte (ii.) des ersten Eintauchens, (iii.) der ersten Herausnahme, (iv.) des zweiten Eintauchens und (v.) der zweiten Herausnahme, baut sich auf diese Weise eine Beschichtung mit einer Schichtdicke in dem bevorzugten Bereich von 15 bis 28 $\mu$m, ganz besonders bevorzugt in einem Bereich von 21 bis 27 μm, auf. Bei dem besonders bevorzugten Aquence™-Verfahren der 900-Serie wird auf die zuvor beschriebene Art und Weise eine Epoxyd/Acryl-basierte innenliegende Korrosionsschutzbeschichtung ausgebildet, siehe z.B. Henkel "Aquence 930 Coating", 01.01.2007 (URL:http/:henkel-adhesives.com/com/ content_data/349689_228941_LT5866_Aquence930_BONDERITE_MPP930.pdf).

Nicht zuletzt mit Blick auf die beiden letzten Sätze des vorherigen Absatzes aber auch generell als bevorzugte Ausführungsform des diesseits vorgeschlagenen Verfahrens gilt es als bevorzugt, wenn

- die Eintauchgeschwindigkeit ($v_1$) für das erste Eintauchen,

- die Geschwindigkeit ($v_2$) für die erste Herausnahme,

- die Eintauchgeschwindigkeit ($v_3$) für das zweite Eintauchen,

- die Geschwindigkeit ($v_4$) für die zweite Herausnahme

jeweils in einem Bereich von 6 bis 12 m/min liegt. Gleichzeitig wird die Füllhöhe (h) zur Gewährleistung einer vollumfänglichen Innenbenetzung mit der Beschichtungsflüssigkeit (3) über die gesamte Rohrlänge (L) des zu beschichtenden Rohres (1) während eines gesamten Eintauch- und Herausnahmezyklusses gemäß der Verfahrensschritte (ii.) zusammen mit (iii.) sowie (iv.) zusammen mit (v.) unter Berücksichtigung der Geschwindigkeiten ($v_1$, $v_2$, $v_3$, $v_4$) derart gewählt, dass diese Benetzungszeit der Rohrinnenwandung (b) mit der Beschichtungsflüssigkeit (3) über einen Zeitraum von 60 sec bis 210 sec, ganz besonders bevorzugt über einen Zeitraum von 85 sec bis 105 sec, erfolgt.

Zur Unterstützung der bei dem hier vorgeschlagenen Verfahren bevorzugt turbulenten Strömung in den Rohren (1) während der Beschichtung wird die Beschichtungsflüssigkeit (3) in dem Tauchbecken (2) mittels einer Umwälzungseinrichtung (6) in Bewegung gehalten. Eine solche Umwälzungseinrichtung (6) ist bevorzugt ein Propeller mit geringer Drehzahl.

Das diesseits vorgeschlagene Verfahren ist im Grundsatz nicht limitiert hinsichtlich des Materials und der Bauform der zu beschichtenden Rohre (1), jedoch gilt das Verfahren in erster Linie und somit bevorzugt als ausgelegt zur Beschichtung von Rohren (1) aus Flussstahl, welche ganz besonders bevorzugt longitudinal geschweißt sind. Bei derartigen Rohren (1) ist deren mögliche Länge (L) bei dem diesseitig vorgeschlagene Verfahren in erster Linie ausschließlich beschränkt durch die Länge des Tauchbeckens (2), bevorzugt sind Längen (L) bis zu 12 m, weiter eingeschränkt bevorzugt zwischen 7 und 12 m und ganz besonders bevorzugt mit einer Länge (L) in einem Bereich von 7 m bis 10 m. Ferner bevorzugt sind derartige Rohre (1) insbesondere aus Flussstahl, bei denen der erste Innendurchmesser ($D_1$) an dem ersten Ende des Rohres (1) und der zweite Innendurchmesser ($D_2$) an dem zweiten Ende des Rohres (1) im Rahmen der möglichen Produktionstoleranzen identisch sind. Dabei weisen diese Rohre (1) innerhalb eines ersten bevorzugten Bereichs eine Nennweite (n) von DN 32 bis DN 250 auf, was im Rahmen der Verwendung von Brandschutzanlagen den gängigen Rohrnennweiten von der Hauptleitung, beispielsweise ausgebildet als Steigleitungen, über mögliche Nebenverteilrohre, beispielsweise ausgebildet als Verteilerleitungen, bis hin zu den Sprinkleranschlussrohren, beispielsweise ausgebildet als Stränge (Strangleitungen), entspricht. Innerhalb dieses ersten bevorzugten Bereichs gilt als ganz besonders bevorzugt ein Bereich von DN 32 bis DN 65, was im Rahmen der Verwendung von Brandschutzanlagen den Rohrnennweiten üblicher Nebenverteilrohre bis hin zu den Sprinkleranschlussrohren entspricht. Die Rohre (1) weisen innerhalb eines zweiten bevorzugten Bereichs sogar eine noch kleinere Nennweite (n) von DN 15 bis DN 32 auf, wobei derartige Rohre bis heute letztendlich mittels keines großtechnisch umgesetzten Verfahrens eine Korrosion verhindernde Innenwandbeschichtung erhalten konnten.

Den diesseits vorgeschlagenen Verfahrensschritten zur Beschichtung von Rohren (1) in ihrem Inneren mittels Eintauchen in die Beschichtungsflüssigkeit (3), insbesondere in die als Epoxyd/Acryl-basierte Aquence™-Beschichtungsmasse ausgebildete Beschichtungsflüssigkeit (3) geht bevorzugt eine mehrstufige Entfettung insbesondere mit zwischengeschobener saurer Beizenbehandlung voraus, wobei alle diese genannte Behandlungen mittels Tauchbäder umgesetzt werden.

In zahlreichen der vorliegenden Erfindung vorausgegangenen Versuchen stellte es sich als besonders positiv heraus, wenn das jeweilige zu beschichtende Rohr (1) mindestens während der vier Verfahrensschritte (ii.) des ersten Eintauchens, (iii.) der ersten Herausnahme, (iv.) des zweiten Eintauchens und (v.) der zweiten Herausnahme gehalten wird mittels dornartiger Auflagehalterungen (4). Zwar weisen diese dornartigen Auflagehalterungen (4) den Nachteil einer verringerten Friktion zwischen Halterung (4) und zu beschichtendem Rohr (1) an seiner Außenseite (a) auf, dafür sind die auszubessernden Beschichtungsfehlstellen sehr klein, was sich eindeutig als kleinerer Nachteil erweist. Soll, wie bevorzugt, gleichzeitig eine Vielzahl an Rohren (1) die Verfahrenschritte (ii.) bis (vi.) vollziehen, gilt es als bevorzugt, wenn die derartigen dornartigen Auflagehalterungen (4) Teile eines Eintauchgestells (5) sind. Das Eintauchgestell (5) ermöglicht dann zusammen mit den dornartigen Auflagehalterungen (4) das gleichzeitige Beschichten einer Vielzahl an Rohren (1), die dabei während der Beschichtungsvorgänge nebeneinander und/oder übereinander zueinander angeordnet sind. Ganz besonders bevorzugt ist es, wenn dabei die dornartigen Auflagehalterungen (4) und/oder das Eintauchgestell (5) Teflon-beschichtet sind, was insbesondere dann gilt, wenn die Beschichtungsflüssigkeit (3) als Epoxyd/Acryl-basierte Aquence™-Beschichtungsmasse ausgebildet ist.

Die Offenbarung bezieht sich auch auf Rohre (1), die nach dem hier vorgeschlagenen Verfahren hergestellt sind, wobei derartige Rohre (1) eine außenseitige und eine innenseitige Anti-Korrosionsbeschichtung aufweisen. Bevorzugt ist diese Anti-Korrosionsbeschichtung eine Epoxyd/Acryl-basierte Aquence™-Beschichtung. Diese Beschichtung ist ganz besonders bevorzugt derart ausgebildet, dass die Beschichtung der Rohre (1) sowohl außen wie auch innen eine Schichtdicke in dem bevorzugten Bereich von 15 bis 28 $\mu$m, ganz besonders bevorzugt in einem Bereich von 21 bis 27 $\mu$m aufweist.

Die Erfinderschaft legt ihren Schwerpunkt zur Verwendung der Rohre (1), wie sie hergestellt werden nach mindestens einer möglichen Ausführung des diesseits vorgeschlagenen Verfahrens, als Durchleitungsrohr für Feuerlöschmedien innerhalb eines Feuerlöschsystems. Dabei erreichen Rohre (1), wie sie hergestellt werden nach mindestens einer möglichen Ausführung des diesseits vorgeschlagenen Verfahrens, einen Wert für C in einem Bereich von 125 bis 150 sowohl bei erstmaliger Inbetriebnahme wie auch noch innerhalb eines Nutzungszeitraums von einem Jahr und ganz besonders bevorzugt auch noch innerhalb eines Nutzungszeitraums von fünf Jahren nach erstmaliger Inbetriebnahme. Dabei bezeichnet der Wert C die Konstante für Art und Zustand einer Rohrleitung innerhalb der Hazen-Williams-Formel, das ist die Formel (1), mit

$$P = 6{,}05 \bullet 10^5 \bullet L \bullet Q^{1,85} \bullet C^{(-1,85)} \bullet d^{(-4,87)}$$

worin:

    P = Druckverlust in der Rohrleitung, in bar,

    Q = Durchflussrate durch die Rohrleitung, in l/min,

    d = mittlere Innendurchmesser des Rohres, in mm,

    C = Konstante für Art und Zustand der Rohrleitung,

    L = Äquivalentlänge von Rohr- und Formstücken, in m.

Durch die Gewährleistung eines Wertes für C in einem Bereich von 125 bis 150 wird auf Basis einer derart ausgebildeten innenliegenden Korrosionsschutzbeschichtung eine komplett ebene und nicht poröse Versiegelung der Innenseiten der Rohre (1) ausgebildet, die seitens des durch die Rohre (1) geführten Löschmediums selbst über viele Jahre nicht mehr unterwandert wird, was selbst für die in den Kupplungen zusammengeführten Rohrenden der Rohre (1) gilt.

Die Rohre (1), die nach dem hier vorgeschlagenen Verfahren hergestellt sind, sind hinsichtlich ihrer Nenngröße praktisch nicht eingeschränkt, insbesondere und bevorzugt sollen die Rohre (1) eine Nennweite (n) in einem Bereich von DN 32 bis DN 250 aufweisen, was den gängigen Rohrnennweiten innerhalb des als Anwendung besonders favorisierten Feuerlöschsystems von der Hauptleitung, beispielsweise ausgebildet als Steigleitungen, über mögliche Nebenverteilrohre, beispielsweise ausgebildet als Verteilerleitungen, bis hin zu den Sprinkleranschlussrohren, beispielsweise ausgebildet als Stränge (Strangleitungen), entspricht. In einer ganz besonders bevorzugten Ausführung sollen die Rohre (1) eine Nennweite in einem Bereich von DN 32 bis DN 65 aufweisen, was den Rohrnennweiten üblicher Nebenverteilrohre bis hin zu den Sprinkleranschlussrohren entspricht.

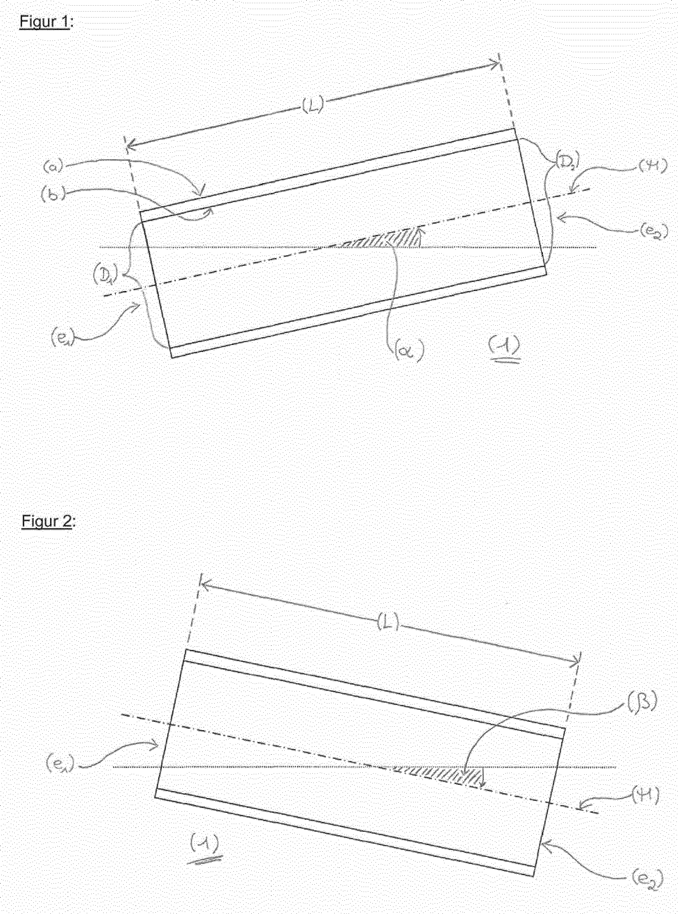

Die folgenden Figuren 1 bis 3 sollen die vorliegende Erfindung weitergehend erläutern.

Figur 1 stellt ein nach dem vorgeschlagenen Verfahren zu beschichtendes Rohr (1) dar, das gegenüber der Waagerechten, welche parallel verläuft zur nicht dargestellten Oberfläche der Beschichtungsflüssigkeit (3), um einen Winkel ($\alpha$) mit 1° < ($\alpha$) < 30° verschwenkt ist. Das hier als longitudinal geschweißtes Metallrohr betrachtete Rohr (1) weist

- eine Außenseite (a) als außenliegende Oberfläche des Rohres (1),

- eine Innenseite (b) als innere Wandung des Rohres (1),

- eine Länge (L)

sowie an seinem hier tiefer gelegenen ersten äußeren Ende ($e_1$) einen ersten Innendurchmesser ($D_1$) auf, der identisch

ist mit dem zweiten Innendurchmesser ($D_2$) an dem zweiten hier höher gelegenen Ende ($e_2$) des Rohres (1).

Figur 2 stellt - aus gleicher Position betrachtet - das gleiche Rohr (1) dar, wie es bereits in Figur 1 gezeigt wurde, mit dem Unterschied, dass das Rohr (1) nun um einen Winkel ($\beta$) mit -30° < ($\beta$) < -1° gegenüber der Waagerechten, welche parallel verläuft zur nicht dargestellten Oberfläche der Beschichtungsflüssigkeit (3), verschwenkt ist. Entscheidend ist hier, dass im Gegensatz zur Situation, wie sie in Figur 1 dargestellt wurde und wo das eine Ende des Rohres (1) - hier das erste äußere Ende ($e_1$) - an tieferer Position gelegen ist, nun das andere Ende des Rohres (1) - hier das zweite äußere Ende ($e_2$) - an tieferer Position gelegen ist, während das jeweils andere Ende des Rohres an der entsprechend höheren Position gelegen ist.

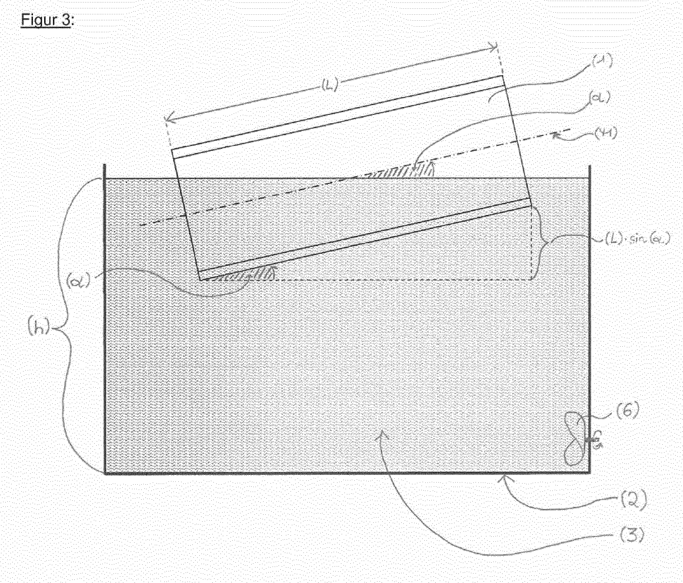

Figur 3 zeigt eine Szene während des Verfahrensschrittes (iii.), in dem das zu beschichtende Rohr (1) nach dem ersten Eintauchen in die Beschichtungsflüssigkeit (3) gemäß Verfahrensschritt (ii.) wieder aus der Beschichtungsflüssigkeit (3) unter Gewährleistung eines Winkels (a) zwischen der Mittelachse (M) und der Oberfläche der Beschichtungsflüssigkeit (3) mit 1° < ($\alpha$) < 30° auftaucht und herausgenommen wird. Dabei kommt das Rohr zum Einsatz, das bereits in Figur 1 genauer vorgestellt wurde und bei dem das zweite Ende ($e_2$) des Rohres (1) um den Betrag (L) • sin ($\alpha$) höher gelegen ist im Vergleich zum ersten Ende ($e_1$) des Rohres (1). In Figur 3 ist das Rohr zum Teil schon außerhalb der Beschichtungsflüssigkeit (3), welche offensichtlich innerhalb des Tauchbeckens (2) eine Füllhöhe (h) aufweist mit (h) > (L) • sin ($\alpha$). Zur Unterstützung einer bevorzugt turbulenten Strömung in dem Rohr (1) während der Beschichtung ist im dargestellten Fall an der Seitenwand des Tauchbeckens (2) ein Propeller zur Umwälzung der Beschichtungsflüssigkeit (3) vorgesehen.

Anhand der nachfolgenden Beispiele soll die Erfindung weitergehend veranschaulicht werden. Zu diesem Zweck werden auf zahlreiche Teflon beschichtete dornartige Auflagehalterungen (4) eines ebenfalls Teflon beschichteten Eintauchgestells (5) jeweils 9 m lange, longitudinal geschweißte Metallrohre aufgelegt, welche eine durchgehende Nennweite (n) in einem Bereich von DN 15 bzw. DN 32 aufweisen. Das Eintauchgestell (5) wird von oben getragen mittels eines Laufkatzenkrans, der in der Lage ist, sowohl den vorderen Teil wie auch den hinteren Teil des Eintauchgestells (5) einzeln jeweils abzusenken bzw. anzuheben, womit die jeweils ersten Enden der Rohre (1), getragen von dem Eintauchgestell (5) mit den Auflagehalterungen (4), und jeweils die zweiten Enden der Rohre (1) einzeln abgesenkt bzw. angehoben werden können. Die Rohre (1) selbst sind dabei aufgebaut und im Raum orientiert wie dargestellt in den Figuren 1 und 2.

In mehreren hintereinander geschalteten Tauchbecken werden die Rohre (1) entfettet und zwischengespült. In einem weiteren Tauchbecken (2), aufgebaut wie dargestellt in Figur 3, werden die wie beschrieben vorbehandelten und wie beschrieben getragenen Rohre (1) in ihrem Inneren mit einer Beschichtung beaufschlagt, wozu das Tauchbecken (2) über eine Füllhöhe (h) mit (h) > (L) • sin ($\alpha$) und (h) > (L) • sin ($\beta$) mit einer Beschichtungsflüssigkeit (3) gefüllt ist. Die Beschichtungsflüssigkeit (3) ist dabei eine Epoxyd/Acryl-basierte Aquence™-Beschichtungsmasse der 900-Serie von der Firma Henkel in Düsseldorf, Deutschland. Die einzelnen DN-Nennweiten (n) der Rohre (1), die Eintauch- und die hier identischen Herausnahmewinkel ($\alpha = \beta$), die Wiederholungszahl über die vier Verfahrensschritte (ii.) des ersten Eintauchens, (iii.) der ersten Herausnahme, (iv.) des zweiten Eintauchens und (v.) der zweiten Herausnahme, die Fördergeschwindigkeiten ($v_1 = v_2 = v_3 = v_4$) für das Eintauchen und die Herausnahme, die Verweildauer sowie die erzielte Beschichtungs-dicke sind der nachfolgenden Tabelle 1 zu entnehmen. Die beschichteten Rohre (1) werden schließlich gespült und getrocknet.

Die Beispiele als Ergebnisse der durchgeführten Versuche bestätigen die Erkenntnisse der gemachten Erfindung höchst anschaulich. Unterhalb von a, -$\beta$ = 1 ° fällt die Beschichtung der Innenwandung (b) der Rohre (1) zu gering aus und mit festzustellenden Fehlstellen und Rissen, gleiches gilt für Bereiche oberhalb von a, -ß = 30°. Innerhalb des beanspruchten Winkelbereichs von 1° < ($\alpha$) < 30° und -30°< ($\beta$) < -1 sind die Beschichtungen einheitlich und mindestens in einem Bereich oberhalb von 12,8 $\mu$m mit einem bemessenen Wert von C = 125 als Konstante für Art und Zustand der Rohrleitung innerhalb der Hazen-Williams-Formel. Innerhalb der bevorzugten Winkelbereiche von 1,8° < ($\alpha$) < 5,5° und -5,5° < ($\beta$) < -1,8° können auch Beschichtungsdicken von mehr als 21 $\mu$m mit einem bemessenen Wert von C > 130 erzielt werden. Die Beschichtungen sind absolut einheitlich und frei von jeglichen Fehlstellen, womit sie von Wasser auch auf Jahre hinaus nicht unterwandert werden können. Damit wird die zugrunde liegende Aufgabe, Rohre (1) der Allgemeinheit zur Verfügung zu stellen, die auch nach längerer Zeit der Benutzung frei von Korrosionen sind und damit eine monetäre Verbesserung in der Auslegung und im Betrieb von Brandschutzanlagen, genauer von Sprinkleranlagen ermöglichen, vollständig gelöst.


Tabelle 1:

| Beispiel | Rohr (1) – DN-Nennweite (n) | Winkel (α = -β) | Wiederholungszahl über die vier Verfahrensschritte (ii.), (iii.), (iv.), (v.) | Fördergeschwindigkeiten ($v_1 = v_2 = v_3 = v_4$) | Verweildauer pro Tauchgang gemäß der Verfahrensschritte (ii.) mit (iii.) und (iv.) mit (v.) | Ø-Beschichtungsstärke | Bemerkung/Beurteilung |
|---|---|---|---|---|---|---|---|
| 1 | 32 | 0° | 1 | 9 m/min | 90 sec | 8,5 µm | Rohre (1) schwimmen während des Eintauchens teilweise auf, keine durchgehende und fehlerfreie Beschichtung |
| 2 | 32 | 2,5° | 2 | 9 m/min | 80 sec | 28,0 µm | Hervorragende, einheitliche Beschichtung; C = 140 |
| 3 | 15 | 2,5° | 1 | 9 m/min | 90 sec | 12,8 µm | Einheitliche Beschichtung; C = 125 |
| 4 | 15 | 4,5° | 3 | 9 m/min | 60 sec | 25,5 µm | Hervorragende, einheitliche Beschichtung; C = 140 |
| 5 | 15 | 10° | 2 | 9 m/min | 80 sec | 13,5 µm | Einheitliche Beschichtung; C = 125 |
| 6 | 32 | 4,5° | 2 | 9 m/min | 80 sec | 21,5 µm | Hervorragende, einheitliche Beschichtung; C = 130 |
| 7 | 32 | 10° | 4 | 9 m/min | 60 sec | 25,5 µm | Hervorragende, einheitliche Beschichtung; C = 130 |
| 8 | 32 | 20° | 2 | 9 m/min | 80 sec | 15,5 µm | Einheitliche Beschichtung; C = 125 |
| 9 | 32 | 40° | 3 | 9 m/min | 60 sec | 10,0 µm | Risse und Fehlstellen in der Beschichtung; C = 105 |
| 10 | 32 | 45° | 2 | 9 m/min | 80 sec | 8,5 µm | Risse und Fehlstellen in der Beschichtung; C = 100 |

**Patentansprüche**

1. Verwendung einer Epoxid/Acryl-basierten Beschichtungsflüssigkeit (3), welche FeF3-Eisenfluorid und Lackpartikel in wässriger Dispersion enthält, zum Ausbilden einer Korrosionsschutzbeschichtung an einer Innenseite (b) eines Rohres (1) auf chemischer Basis,
wobei das in seinem Inneren zu beschichtende Rohr (1) die Innenseite (b) und ferner

- eine Außenseite (a),
- ein erstes äußeres Ende (e1) an dem ersten Ende des Rohres (1) und ein zweites äußere Ende (e2) an dem zweiten Ende des Rohres (1),
- eine Länge (L),
- einen ersten Innendurchmesser (D1) an dem ersten Ende des Rohres (1), einen zweiten Innendurchmesser (D2) an dem zweiten Ende des Rohres (1), und
- eine Mittelachse (M) aufweist, **dadurch gekennzeichnet, dass** das Rohr (1) in einem Winkel ($\alpha$) mit 1 ° < ($\alpha$) < 30° bzw. einem Winkel ($\beta$) mit -30° < ($\beta$) < -1° gegenüber der Waagerechten, welche parallel verläuft zur Oberfläche der Beschichtungsflüssigkeit (3), verschwenkt und die Beschichtungsflüssigkeit (3) in einer turbulenten Strömung an die Innenseite (b) gebracht wird.

2. Verwendung nach Anspruch 1,
   wobei die Korrosionsschutzschicht eine Schichtdicke in einem Bereich von 15 bis 28 $\mu$m aufweist.

3. Verwendung nach Anspruch 2,
   wobei die Korrosionsschutzschicht eine Schichtdicke in einem Bereich von 21 bis 27 $\mu$m aufweist.

4. Verwendung nach einem der vorstehenden Ansprüche,
   wobei das Rohr (1) eine Nennweite (n) in einem Bereich von DN 32 bis DN 250, vorzugsweise DN 32 bis DN 65 aufweist.

5. Verwendung nach einem der Ansprüche 1 bis 3,
   wobei das Rohr (1) eine Nennweite (n) in einem Bereich von DN 15 bis DN 32 aufweist.

## Claims

1. A use of an epoxy-acrylic-based coating liquid (3) containing FeF$_3$ iron fluoride and paint particles in an aqueous dispersion to form an anti-corrosion coating in an interior (b) of a pipe (1) on a chemical basis,
   wherein the pipe (1) that is to be coated on its inside comprises the inside (b) and further

   - an outside (a),
   - a first outer end (e$_1$) at the first end of the pipe (1) and a second outer end (e$_2$) at the second end of the pipe (1),
   - a length (L),
   - a first inside diameter (D$_1$) at the first outer end (e$_1$) of the pipe (1) and a second inside diameter (D$_2$) at the second outer end (e$_2$) of the pipe (1), and
   - a central axis (M),

   **characterized in that** the pipe (1) is pivoted at an angle ($\alpha$) of 1° < ($\alpha$) < 30°, respectively an angle ($\beta$) of -30° < ($\beta$) < -1°, with respect to the horizontal line extending in parallel to the surface of the coating liquid (3), and the coating liquid (3) is brought against the inside (b) in a turbulent flow.

2. The use of claim 1,
   wherein the anti-corrosion layer comprises a layer thickness in a range of 15 to 28 $\mu$m.

3. The use of claim 2,
   wherein the anti-corrosion layer comprises a layer thickness in a range of 21 to 27 $\mu$m.

4. The use of anyone of the preceding claims,
   wherein the pipe (1) comprises a nominal width (n) in a range of DN 32 to DN 250, preferably DN 32 to DN 65.

5. The use of anyone of claims 1 to 3,
   wherein the pipe (1) comprises a nominal width (n) in a range of DN 15 to DN 32.

## Revendications

1. Utilisation d'un liquide de revêtement (3) à base d'époxyde/acryle, lequel contient du fluorure de fer FeF3 et des particules de vernis dans une dispersion aqueuse, pour la réalisation d'un revêtement anti-corrosion sur une face intérieure (b) d'un tube (1) à base chimique,

dans laquelle le tube (1) à revêtir dans son intérieur présente la face intérieure (b) et en outre

- une face extérieure (a),
- une première extrémité extérieure (e1) sur la première extrémité du tube (1) et une deuxième extrémité extérieure (e2) sur la deuxième extrémité du tube (1),
- une longueur (L),
- un premier diamètre intérieur (D1) sur la première extrémité du tube (1), un deuxième diamètre intérieur (D2) sur la deuxième extrémité du tube (1), et
- un axe médian (M),

**caractérisée en ce que**

le tube (1) pivote selon un angle ($\alpha$) avec 1°<($\alpha$)<30° ou un angle ($\beta$) avec -30°<($\beta$)<-1° par rapport à l'horizontale, laquelle s'étend parallèlement à la surface du liquide de revêtement (3), et le liquide de revêtement (3) est amené sur la face intérieure (b) dans un écoulement turbulent.

2. Utilisation selon la revendication 1,
dans laquelle la couche anti-corrosion présente une épaisseur de couche dans une plage de 15 à 28 $\mu$m.

3. Utilisation selon la revendication 2,
dans laquelle la couche anti-corrosion présente une épaisseur de couche dans une plage de 21 à 27 $\mu$m.

4. Utilisation selon l'une quelconque des revendications précédentes,
dans laquelle le tube (1) présente une largeur nominale (n) dans une plage de DN 32 à DN 250, de préférence DN 32 à DN 65.

5. Utilisation selon l'une quelconque des revendications 1 à 3,
dans laquelle le tube (1) présente une largeur nominale (n) dans une plage de DN 15 à DN 32.

Figur 1:

Figur 2:

Figur 3:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- *Aquence 930 Coating,* 01. Januar 2007, http/:henkel-adhesives.com/com/content_data/349689_228941_LT5866_Aquence930_BONDERITE_MPP930.pdf